# EUROPÄISCHE PATENTSCHRIFT

(11) **EP 2 039 666 B1**
(45) Veröffentlichungstag und Bekanntmachung des Hinweises auf die Patenterteilung: **10.08.2016**
(21) Anmeldenummer: 08010764.2
(22) Anmeldetag: 13.06.2008
(51) Int. Cl.: C04B 35/573, C04B 35/64, F27B 9/36, F27D 3/02, F27B 9/04, F27B 9/24

(54) **Verfahren und Vorrichtung zur Silicierung von kohlenstoffhaltigen Werksstoffen**
Method and device for siliconising materials containing carbon
Procédé et dispositif d'enrichissement en silicium de matières premières contenant du carbone

(30) Priorität: 19.09.2007 DE 102007044783
(43) Veröffentlichungstag der Anmeldung: 25.03.2009
(73) Patentinhaber: Audi AG, 85045 Ingolstadt (DE)
(72) Erfinder: Mederle, Otto, 86405 Meitingen (DE); Daimer, Johann, 64546 Mörfelden-Walldorf (DE); Beck, Rudi, 86571 Mönchsdeggingen (DE)
(74) Vertreter: Asch, Konrad

(56) Entgegenhaltungen:
- EP-A2- 0 864 548
- EP-A2- 1 829 843

## Beschreibung

Die vorliegende Erfindung betrifft ein Verfahren zur Silicierung von kohlenstoffhaltigen Werkstoffen und eine dafür angepasste Vorrichtung.

Ein Verfahren zur Silicierung von Kohlenstoff-Werkstoffen wurde von einer Arbeitsgruppe der DLR (Deutsche Forschungsanstalt für Luft- und Raumfahrt e. V.), Stuttgart, Institut für Bauweisen- und Konstruktionsforschung, bei der VDI-Werkstoff-Tagung in Duisburg vom 9. bis 10. März 1994 beschrieben. Kohlenstoff-Werkstoffe verstärkt mit Fasern aus Kohlenstoff wurden mittels einer sogenannten "Flüssig-Silicierungs-Methode" mit geschmolzenem Silicium infiltriert. Durch Wärmebehandlung reagiert das elementare Silicium mit dem Kohlenstoff zu Siliciumcarbid. Aus solchen Werkstoffen lassen sich Strukturbauteile sowie auch insbesondere Reibkörper für Brems- und Kupplungssysteme in Automobilen herstellen.

Aus der Patentanmeldung EP 0 864 548 A2 ist bekannt, Körper aus mit Fasern aus Kohlenstoff verstärktem Kohlenstoff (CFC) in einen Behälter einzubringen, auf dessen Boden sich geschmolzenes Silicium befindet, das in alle Poren und Risse des CFC-Körpers eindringt und dort mit dem Kohlenstoff der Matrix zu Siliciumcarbid reagiert. Dabei wird der CFC-Körper in vorteilhafter Weise auf poröse Dochte aufgesetzt, deren unterer Teil im flüssigen Silicium steht.

Ähnliche Verfahren sind beispielsweise in der EP 0 956 276 beschrieben, wobei die zu silicierenden Kohlenstoff-Werkstücke und geeignet gebundenes pulverförmiges Silicium gemeinsam erhitzt werden, das aufgeschmolzene Silicium in die Kohlenstoff-Werkstücke eindringt und mit dem Kohlenstoff zumindest teilweise zu Siliciumcarbid reagiert.

Die beschriebenen Verfahren sind ein Chargenverfahren, bei denen eine chargenweise Umwandlung von Kohlenstoff-Werkstoffen in Werkstoffe mit einer Siliciumcarbid enthaltenden Matrix stattfindet. Dabei müssen die Öfen, in denen das Silicium aufgeschmolzen wird, und in denen die Reaktion von flüssigem Silicium mit Kohlenstoff zu Siliciumcarbid vorgenommen wird, zunächst beladen, unter Inertgasatmosphäre aufgeheizt und gegebenenfalls evakuiert werden, und nach der Reaktion zu Siliciumcarbid mit der dafür erforderlichen Haltezeit abgekühlt und entladen werden. Derartige Verfahren erfordern lange Heiz- und Kühlzeiten und sind ungünstig bezüglich der Energienutzung.

Ein günstiges Verfahren umfaßt daher eine kontinuierlich oder taktartig halbkontinuierlich zu betreibende Behandlung von Werkstücken aus gegebenenfalls mit Fasern, bevorzugt solchen aus Kohlenstoff, verstärktem porösem Kohlenstoff mit flüssigem Silicium unter mindestens teilweiser Umwandlung des Kohlenstoffs zu Siliciumcarbid. Ein derartiges kontinuierliches oder halbkontinuierliches Verfahren zur Silicierung ist in der Anmeldung DE 10 2006 009 388.7 (= EP 1 829 843 A2) beschrieben. Dabei ist jedoch der Silicierungsschritt diskontinuierlich, der zu tränkende Körper wird auf Dochte aufgesetzt, und während der Silicium-Infiltration nicht transportiert. Durch die Dochte ist auch die Zuführung des Siliciums ungleichmäßig über die Auflagefläche verteilt, dies kann zu Inhomogenität des getränkten Körpers führen. Es besteht daher die Aufgabe, auch für den Schritt der Silicierung, also der Zuführung von flüssigem Silicium in Werkstücke aus gegebenenfalls mit Fasern, bevorzugt solchen aus Kohlenstoff, verstärktem porösem Kohlenstoff, und der nachfolgenden Reaktion des in die Werkstücke aufgenommen Siliciums mit zumindest einem Teil des Kohlenstoffs in den Werkstücken zu Siliciumcarbid, ein kontinuierliches Verfahren zu schaffen.

Die Aufgabe wird gelöst durch ein Verfahren, das die folgenden Schritte umfasst:
a Vorheizen von gegebenenfalls mit Fasern verstärkten porösen Kohlenstoff-Werkstücken unter Inertgas ausgehend von Raumtemperatur auf eine gewählte Betriebstemperatur T_{B}1,
c Zuführen von flüssigem Silicium zu den porösen Kohlenstoff-Werkstücken bei einem Betriebsdruck p_{B}2 und einer Betriebstemperatur T_{B}2 und Tränken der porösen Kohlenstoff-Werkstücke mit flüssigem Silicium
d Reaktion des in die Werkstücke eingedrungenen flüssigen Siliciums mit Kohlenstoff in den Werkstücken bei einer Temperatur T_{B}3 unter Bildung von Siliciumcarbid
e Begasen der Werkstücke mit Inertgas und Abkühlen von der Betriebstemperatur T_{B}3 auf eine Konditionierungstemperatur Tₖ unter Weiterführung der Reaktion und Abbauen der in den Werkstücken entstandenen Spannungen
f Abkühlen der Werkstücke auf Raumtemperatur,
wobei im Schritt c die Zuführung des Siliciums und der Transport der Werkstücke über zumindest im Außenbereich poröse, vorzugsweise zylindrische Rollen erfolgt, die drehbar gelagert sind, und deren Drehgeschwindigkeit die Verweilzeit für die Zuführung des Siliciums im Schritt c und die anfängliche Reaktion des Siliciums mit dem Kohlenstoff unter Bildung von Siliciumcarbid bestimmt, und wobei die Temperatur T_{B}3 größer als oder gleich der Temperatur T_{B}2 ist, und die Werkstücke bei dem Verfahrensschritt d nicht mehr in Kontakt mit flüssigem Silicium außerhalb der Werkstücke stehen.

Dabei wirken die porösen Rollen wie Dochte, die flüssiges Silicium aufnehmen, beispielsweise aus einem Bad, und dies an die Werkstücke abgeben. In bevorzugter Weise tauchen die porösen Rollen mit ihrer Unterseite in ein Reservoir mit flüssigem Silicium ein, wobei die Poren der Rollen zumindest teilweise mit flüssigem Silicium gefüllt werden, und geben dies Silicium zumindest teilweise ab an die aufliegenden porösen Kohlenstoff-Werkstücke, nach einer Drehung um den dafür erforderlichen Drehwinkel, wobei die Auflage der Werkstücke auf der Oberseite der Rollen zumindest punktförmig, im Fall von zylindrischen Rollen und Werkstücken mit ebener Unterfläche streckenförmig, und im Fall von prismenförmigen Rollen mit polygonalem Querschnitt und Werkstücken mit ebener Unterfläche flächenförmig ist.

Es ist erfindungsgemäß auch möglich, die Rollen nicht zylindrisch, sondern im Außenbereich (Mantelbereich) polygonal auszuführen, beispielsweise als achsensymmetrisches Prisma mit mindestens drei, bevorzugt mindestens vier, und bevorzugt bis zu acht Mantelflächen, wobei die zur Achse parallelen Kanten vorzugsweise verrundet sind.

Das Verfahren kann mit den erfindungsgemäßen Rollendochten kontinuierlich ausgeübt werden. Für ein kontinuierliches Verfahren sind kontinuierlich arbeitende Schleusen, insbesondere Zellenradschleusen, zwischen den einzelnen Kammern **O** vorgesehen.

Ein weiterer Gegenstand der vorliegenden Erfindung ist eine angepasste Vorrichtung zur Ausführung des Verfahrens, bestehend aus mindestens vier Kammern **O1** bis O**4,** die durch Schleusen miteinander verbunden sind, wobei jede der Kammern unabhängig von ihren Nachbarn heizbar, kühlbar, evakuierbar und mit geeigneten Gasen zu befüllen oder zu spülen ist. Dabei ist jede der Kammern **Oᵢ** mit mindestens einer Transport- oder Fördereinrichtung versehen, mit deren Hilfe die Werkstücke von der vorigen Kammer **Oᵢ₋₁** in die Kammer **Oᵢ** und aus der Kammer **Oᵢ** in die nachfolgende Kammer **Oᵢ₊₁** transportiert werden, wobei beispielsweise in der Ausgestaltung mit 4 Kammern **Oᵢ₌₀** der Einlass und **Oᵢ₋₅** der Auslass aus der aus vier Kammern bestehenden Anordnung ist. Im Fall von vier Kammern kann der Index i die Werte 1, 2, 3 und 4 annehmen. Der Einlass (erste Schleuse) und der Auslass (letzte Schleuse) werden hier zur Vereinfachung als **O0** und **05** bezeichnet. Die Transportvorrichtung in der für die Infiltration mit flüssigem Silicium vorgesehenen Kammer umfasst eine Welle und darauf befestigte als Rollendochte bezeichnete Rollen aus einem porösen Material, wobei das Werkstück auf der Oberseite der Rollen durch eine Drehbewegung der Rollen transportiert wird, und wobei die Rollen auf ihrer Unterseite in ein Bad mit flüssigem Silicium eintauchen. In bevorzugter Weise sind die Rollendochte aus mit Fasern aus Kohlenstoff verstärktem porösen Kohlenstoff (CFC) ausgeführt. Es ist besonders bevorzugt, die Rollendochte in Lagern aus Bornitrid zu führen.

Durch räumliche Trennung der einzelnen Verfahrensschritte und eine kontinuierliche oder taktartige halbkontinuierliche Förderung der Werkstücke in durch Schleusen voneinander und der Umgebung getrennte Kammern ergibt sich die Möglichkeit, den Betriebszustand (Temperatur, Druck) in den einzelnen Kammern möglichst konstant zu lassen; dies führt zu gleichmäßigen Betriebszuständen, Verringerung des Energiebedarfs, und höherer Flexibilität in der Fertigung. Die Förderung oder der Transport der Werkstücke außerhalb der für die Silicierung bestimmten Kammer kann durch an sich bekannte Mittel und Verfahren erfolgen, beispielsweise durch Gleiten oder Förderung mittels eines Schiebers, durch Transport auf Rollen, mittels eines oder mehrerer Hubbalken, oder auf einer Gliederkette. Dabei werden Materialien für die Transportmittel eingesetzt, die den gewählten Temperaturen und den eingesetzten Medien standhalten, beispielsweise ausgewählt aus Graphit und anderen Kohlenstoffmaterialien, die mit Fasern z. B. aus Kohlenstoff verstärkt sein können, sowie auch Werkstoffe aus Bornitrid oder refraktäre Werkstoffe, die mit Bornitrid beschichtet sind.

Dabei können die Schritte a und b sowie die Schritte d und e jeweils in einer gemeinsamen Kammer durchgeführt werden, während ansonsten für jeden der Verfahrensschritte mindestens eine separate Kammer vorgesehen ist.

Die Beheizung in den Kammern erfolgt mit bekannten Heizgeräten, insbesondere Infrarotstrahler, induktive Heizungen, Mikrowellenbeheizung und Beheizung durch gewärmtes Gas (Inertgas). Die Kühlung erfolgt durch Durchströmen der betreffenden Kammer mit einem gekühlten Gasstrom, wobei bei höheren Temperaturen Inertgase wie Stickstoff und Argon bevorzugt werden, während bei Temperaturen von höchstens 300 °C auch Luft verwendet werden kann.

Es ist bevorzugt, in der Kammer **O1** eine Induktionsheizung zu benutzen, da diese Art der Beheizung sehr rasch große Energiemengen in das Werkstück einbringen kann.

Die Vorrichtung wird durch die Zeichnungen erläutert. Dabei zeigen
- Fig. 1: einen schematischen Schnitt durch eine Anordnung mit vier Kammern; zur Verbesserung der Übersichtlichkeit sind die Zu- und Abführungen für die verwendeten Gase nicht eingezeichnet,
- Fig. 2: einen Ausschnitt aus der zweiten Kammer **02** gemäß der Fig. 1, mit der detaillierten Darstellung der Lagerung des Werkstücks **95** auf (zwei dargestellten) mindestens im Außenbereich porösen zylindrischen Rollendochten **26,** die mit ihrem unteren Teil in eine Bad mit flüssigem Silicium eintauchen, und die das flüssige Silicium zu dem Werkstück 95 führen,
- Fig. 3: zwei unverrundete Rollendochte in Form von Sechskant-Prismen, und
- Fig. 4: einen abgewandelten Ausschnitt aus Fig. 3, wobei anstelle der unverrundeten Prismenkanten jeweils eine verrundete Prismenkante dargestellt ist, und
- Fig. 5: einen Schnitt durch einen zylindrischen Rollendocht, wobei der innere Teil massiv und der äußere Teil porös ausgeführt ist.

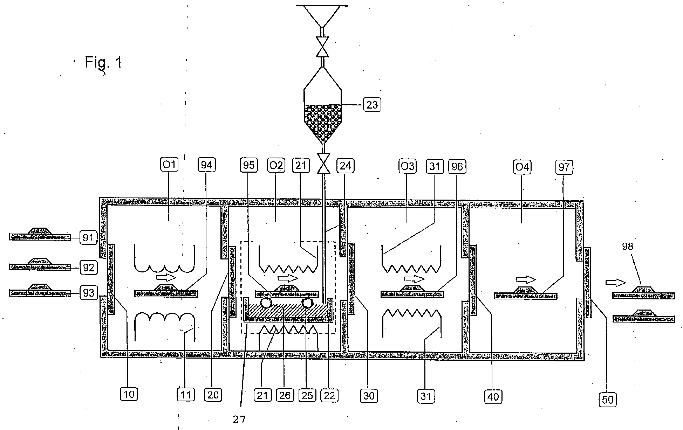

Gemäß der Erfindung wird bevorzugt in einer in Fig. 1 dargestellten Vorrichtung aus vier Kammern so verfahren, dass in die erste Kammer **O1** durch die Schleuse **10** von außen nacheinander die Werkstücke eingeführt werden, hier dargestellt als die als nächstes einzuführenden und als **91, 92** und **93** bezeichnet. Nach dem Schließen der Schleuse **10** wird die Kammer **O1** gemäß dem Verfahrensschritt a mit einem Inertgasschwall gespült, bevorzugt mit Stickstoff oder Argon, nach dem Verdrängen der Luft mittels gegebenenfalls mehrerer Sequenzen von Inertgasspülen und Evakuieren wird das bereits in der Kammer befindliche Werkstück **94** bevorzugt durch eine Induktionsheizung **11** von Raumtemperatur auf die Betriebstemperatur T_{B}1 erwärmt, die von 1300 °C bis 1800 °C, bevorzugt 1350 °C bis 1750 °C betragen kann. In bevorzugter Weise wird der Betriebsdruck von 1 bar (Außendruck, 10⁵ Pa) auf einen Wert p_{B}1 von bevorzugt höchstens 100 mbar (100 hPa), besonders bevorzugt bis zu 50 hPa (50 mbar), und insbesondere höchstens 20 mbar (20 hPa) erniedrigt. Diese Absenkung des Drucks gemäß dem Verfahrensschritt b kann vor dem Heizen, während des Heizens oder nach dem Heizen erfolgen.

Spätestens vor dem Öffnen der Schleuse **20** wird in der Kammer **O1** ein Unterdruck erzeugt, wie er auch bevorzugt ständig in der Kammer **02** herrscht, bevorzugt unter 10 hPa (10 mbar), insbesondere unter 1 Pa (10⁻² mbar).

Ist dieser Druck erreicht, wird das Werkstück durch die Schleuse **20** in die Kammer **02** transportiert, wo es jetzt als **95** bezeichnet wird. Nach dem Schließen der Schleuse **20** wird ein neues Werkstück von außen durch die Schleuse **10** in die Kammer **O1** eingeführt und wie oben beschrieben aufgeheizt.

In der Kammer **02** wird das Werkstück **95** bei einem Betriebsdruck p_{B}2 von höchstens ca. 10⁻² mbar (1 Pa) und bei einer über die Heizung **21** einstellbaren Betriebstemperatur T_{B}2 von 1450 °C bis 1700 °C von einer nicht dargestellten Transportvorrichtung aufgenommen und auf die in der Silicierungsvorrichtung **27** angeordneten Rollendochte **26** aufgesetzt. In dieser Silicierungsvorrichtung **27** gelangt gemäß dem Verfahrensschritt c in einem Becken **22** befindliches flüssiges Silicium **25** über die zumindest im Außenbereich porösen Rollendochte **26** in das Werkstück **95** aus Kohlenstoff. Bei der in der Kammer herrschenden Temperatur von zwischen 1450 °C und 1700 °C dringt Silicium in die Poren des Werkstücks **95** ein und reagiert zumindestens teilweise gemäß dem Verfahrensschritt d mit dem in dem Werkstück vorhandenen Kohlenstoff zu Siliciumcarbid. Das Werkstück wird nach dieser Behandlung als "siliciertes Werkstück" bezeichnet.

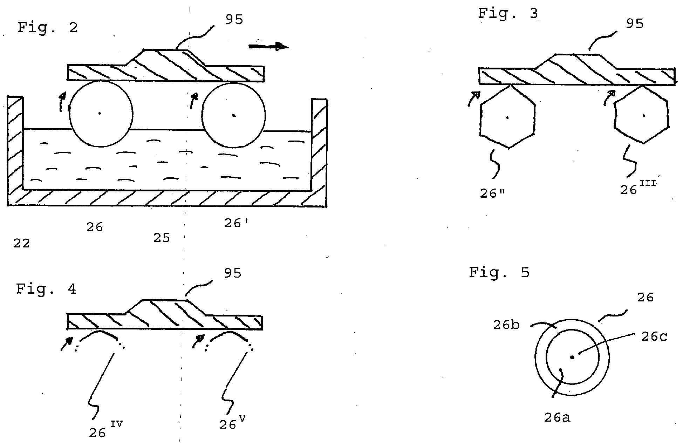

In der Fig. 2 ist ein Detail der Kammer **02** gezeigt, in der ein Werkstück **95** auf zwei zylinderförmigen Rollendochten **26** und **26'** transportiert wird. Die Rollendochte tauchen mit ihrem unteren Teil in eine Wanne **22** mit geschmolzenem Silicium **25** ein. In der Fig. 3 ist eine ähnliche Anordnung unter Weglassen der Wanne und des flüssigen Silicium dargestellt, wobei hier zwei Rollendochte **26"** und **26"'** in Form von Sechskantprismen mit scharfen, unverrundeten Kanten vorgesehen sind; die Fig. 4 zeigt eine ähnliche Anordnung, bei der Rollendochte **26^{IV}** und **26^{V}** mit verrundeten Prismenkanten vorgesehen sind. Die Fig. 5 zeigt einen Schnitt durch einen zylindrischen Rollendocht **26,** mit einer Achse **26c,** die bevorzugt zumindest in dem Bereich, in dem sie mit Silicium in Kontakt kommen kann, mit einer Bornitridschicht überzogen ist, sowie einem massiven inneren Teil **26a** und einem porösen äußeren Teil **26b.**

Durch die Drehgeschwindigkeit der Rollendochte und die bauliche Länge der Kammer **02** kann die Verweilzeit der zu silicierenden Werkstücke in der Kammer **02** gewählt werden. Die Menge des in das Werkstück eingebrachten Siliciums ist bei gegebener Porosität der Rollendochte und des Werkstücks und Temperatur von der Umfangsgeschwindigkeit und der Dicke (Radius) der Rollendochte **26** bzw. von der Dicke des porösen Teils **26b** in Fig. 5 der Rollendochte und von dem Füllgrad der Rollendochte abhängig, sie kann auch dadurch angepasst werden, daß die Zahl der Rollendochte oder die Größe der ebenen Teile der Mantelfläche der Rollendochte bei prismenförmigen Rollendochten variiert wird. Bei den prismenförmigen Rollendochten ist eine bevorzugte Ausführungsform, diese Rollendochte nicht mit konstanter Winkelgeschwindigkeit zu drehen, sondern eine taktförmige Drehung derart anzuwenden, dass bei vollflächigem Kontakt zwischen der Mantelebene des prismenförmigen Rollendochts und der Unterfläche des Werkstücks eine Ruhephase oder Pause mit vorbestimmbarer wählbarer Dauer eingelegt wird, und anschließend die Drehung wieder aufgenommen wird bis zum nächsten vollflächigen Kontakt. Der längere Kontakt ermöglicht in einfacher Form das Einbringen größerer Mengen an Silicium. Die Dauer der Ruhephase wird entsprechend der erforderlichen Menge an einzubringendem Silicium gewählt. Nach der Silicierung in der Kammer **02** wird das silicierte Werkstück **95** von den Rollendochten abgehoben und durch die Schleuse **30** in die Kammer **03** transportiert.

In bevorzugter Weise wird das Material und/oder die Porosität der Rollen so gewählt, daß ein Fluß von Silicium aus den porösen Rollen in das zu tränkende Werkstück gewährleistet ist. Dabei haben sich besonders Rollen aus porösem Kohlenstoff bewährt, der mit Fasern aus Kohlenstoff verstärkt ist. In einer bevorzugten Ausführungsform wie in Fig. 5 dargestellt ist es möglich, die Rollendochte **26** aus einem massiven Material **26a** auszuführen, und lediglich im Außenbereich (fern der Drehachse der Rollen) ein poröses Material **26b** zu verwenden. Ein geeignetes poröses Material weist vorzugsweise eine offene Porosität auf, die bevorzugt mindestens 30 % des Volumens des Materials beträgt. Dabei ist der mittlere Porendurchmesser (bestimmt durch Auswertung von Mikro-Photographien) vorzugsweise höchstens 10 µm. Der Durchmesser der Rollen ist bevorzugt im Bereich von 150 mm bis 300 mm.

Der Pegel des flüssigen Siliciums in dem Becken **22** wird bevorzugt kontinuierlich auf den voreingestellten Wert ergänzt, dazu dient ein Reservoir **23** mit flüssigem Silicium, das durch ein Rohr **24** mit dem Becken **22** verbunden ist.

In der Kammer **03** wird gegebenenfalls durch weiteres Aufheizen mit der Heizung **31** die Reaktion gemäß dem Verfahrensschritt d in dem silicierten Werkstück in dem gewünschten Maß vervollständigt, wobei sich durch die räumliche Trennung von der Kammer **02** die günstige Möglichkeit ergibt, auch bei einer Temperatur T_{B}3 oberhalb der Temperatur T_{B}2 das Werkstück in der Kammer **03** zu tempern, ohne Gefahr zu laufen, dass wie bei der Wahl einer höheren Temperatur in der Kammer **02** durch den höheren Dampfdruck Silicium aus dem Becken **22** entweicht. Es wurde nämlich bei den Versuchen, die der vorliegenden Erfindung zugrundelagen, festgestellt, dass das in den Poren des Werkstücks (nun 96) aufgesaugte Silicium einen deutlich niedrigeren Dampfdruck hat gegenüber dem Silicium im Bad **22** bei derselben Temperatur.

Ein bevorzugter Temperaturbereich für eine derartige Nachreaktion ist der von 1500 °C bis 2000 °C, besonders bevorzugt von 1600 °C bis 1900 °C, und insbesondere von 1700 °C bis 1800 °C. Die Bildung von Siliciumcarbid kann so deutlich schneller verlaufen, was zu einer erwünschten Verkürzung der Zykluszeiten in dem erfindungsgemäßen Verfahren führt.

Die Beheizung in dem Kammern **02** und **03** erfolgt bevorzugt durch Strahlungsheizung, beispielsweise mit durch Joule'sche Wärme zum Glühen gebrachten Graphitheizkörpern **21** und **31.**

Sobald die Reaktion zum Siliciumcarbid in dem gewünschten Maß erfolgt ist, wird das Werkstück in der Kammer **03** durch Einblasen von kaltem Inertgas gemäß dem Verfahrensschritt e gekühlt, bevorzugt auf eine Konditionierungstemperatur T_{K} im Bereich von 500 °C bis 300 °C. Der Betriebsdruck p_{B}3 steigt dabei von anfänglich (Nachreaktion) unter 1 mbar (1 hPa) auf Normaldruck (10⁵ Pa = 1 bar). Anschließend wird das Werkstück **96** durch die Schleuse **40** in die Kammer **04** gebracht und dort in der Position **97** gemäß dem Verfahrensschritt f weiter zunächst mit Inertgas, ab Temperaturen von höchstens 300 °C auch mit Luft auf Raumtemperatur abgekühlt. Durch die Schleuse **50** kann dann das fertige Werkstück 98 ausgetragen werden.

Selbstverständlich wird, bevor das nächste Werkstück **95** in die Kammer **03** zur Nachreaktion überführt wird, diese Kammer **03** wieder auf den Betriebsdruck p_{B}3 evakuiert.

In dem erfindungsgemäßen Verfahren hat sich bei einer Ausführungsform mit vier Kammern eine Verweilzeit der Werkstücke in den Kammern **O1** bis **04** von jeweils drei Minuten bis zu zwanzig Minuten als günstig erwiesen.

Durch das erfindungsgemäße Verfahren wird sichergestellt, dass die in die Kammer **02** zum Silicieren gebrachten Werkstücke **95** stets auf die in **02** herrschende Betriebstemperatur gebracht sind, dass der Betriebsdruck in **02** stets erhalten bleibt und daß insbesondere das Angebot an Silicium zum Infiltrieren stets ausreichend ist. Diese Gleichmäßigkeit von Druck und Temperatur in dem Silicierungsschritt hat sich für das Erreichen einer konstanten Produktqualität als wesentlich erwiesen. Ein weiterer Vorteil ist, dass die Werkstücke nicht im Kontakt mit dem Siliciumbad abgekühlt werden, dadurch wird vermieden, dass durch Volumenkontraktion des Siliciums beim Abkühlen gebildete Poren durch nachgesaugtes Silicium gefüllt werden. Die gleichmäßige Temperatur ermöglicht auch erst die Ausführungsform mit einem flächigen Kontakt und das problemlose Ablösen des Werkstücks von dem ebenen Teil der Mantelfläche durch Weiterdrehen der Rollendochte.

Es ist selbstverständlich möglich, anstelle von reinem Silicium auch Legierungen oder flüssige Mischungen von Silicium mit einem oder mehreren anderen Elementen zur Infiltration einzusetzen. Insbesondere haben sich Zuschläge von Eisen (in einem Massenanteil von bis zu 6 % in der Mischung), refraktären Metallen wie Chrom, Molybdän, Wolfram, Zirkon (in einem Massenanteil von jeweils bis zu 3 % in der Mischung) sowie von Mangan, Aluminium, Kobalt und Nickel (in einem Massenanteil von jeweils bis zu 3 % in der Mischung) erwiesen.

### Liste der Bezugszeichen

- O1: Kammer 1
- 02: Kammer 2
- 03: Kammer 3
- 04: Kammer 4
- 10: Schleuse
- 11: Induktionsheizung
- 20: Schleuse
- 21: Heizung
- 22: Becken
- 23: Reservoir mit flüssigem Silicium
- 24: Rohr
- 25: flüssiges Silicium
- 26, 26', 26", 26"', 26^{IV}, 26^{V}: Rollendochte
- 26a: innerer Bereich des Rollendochts 26
- 26b: äußerer Bereich des Rollendochts 26
- 26c: Achse des Rollendochts 26
- 27: Silicierungsvorrichtung
- 30: Schleuse
- 31: Heizung
- 40: Schleuse
- 50: Schleuse
- 91, 92, 93: Werkstücke
- 94: Werkstück in der Kammer O1
- 95: siliciertes Werkstück in der Kammer 02
- 96: siliciertes Werkstück in der Kammer 03
- 97: siliciertes Werkstück in der Kammer 04
- 98: fertiges siliciertes Werkstück

## Patentansprüche

1. Verfahren zum Behandeln von Werkstücken aus porösem Kohlenstoff-Material mit flüssigem Silicium unter Bildung von Siliciumcarbid, umfassend die Schritte
a Vorheizen von gegebenenfalls mit Fasern verstärkten porösen Kohlenstoff-Werkstücken unter Inertgas ausgehend von Raumtemperatur auf eine gewählte Betriebstemperatur T_{B}1,
c Zuführen von flüssigem Silicium zu den porösen Kohlenstoff-Werkstücken bei einem Betriebsdruck p_{B}2 und einer Betriebstemperatur T_{B}2 und Tränken der porösen Kohlenstoff-Werkstücke mit flüssigem Silicium
d Reaktion des in die Werkstücke eingedrungenen flüssigen Siliciums mit Kohlenstoff in den Werkstücken bei einer Temperatur T_{B}3 unter Bildung von Siliciumcarbid
e Begasen der Werkstücke mit Inertgas und Abkühlen von der Betriebstemperatur T_{B}3 auf eine Konditionierungstemperatur Tₖ unter Weiterführung der Reaktion und Abbauen der in den Werkstücken entstandenen Spannungen
f Abkühlen der Werkstücke auf Raumtemperatur,
wobei im Schritt c die Zuführung des Siliciums und der Transport der Werkstücke über zumindest im Außenbereich poröse, vorzugsweise zylindrische Rollen erfolgt, die drehbar gelagert sind, und deren Drehgeschwindigkeit die Verweilzeit für die Zuführung des Siliciums im Schritt c und die Reaktion des Siliciums mit dem Kohlenstoff unter Bildung von Siliciumcarbid im Schritt d bestimmt, und wobei die Temperatur T_{B}3 größer als oder gleich der Temperatur T_{B}2 ist, und die Werkstücke bei dem Verfahrensschritt d nicht mehr in Kontakt mit flüssigem Silicium außerhalb der Werkstücke stehen.

2. Verfahren nach Anspruch 1, **dadurch gekennzeichnet, dass** die Betriebstemperatur T_{B}2 zwischen 1450 °C und 1700 °C beträgt.

3. Verfahren nach Anspruch 1, **dadurch gekennzeichnet, dass** im Schritt c die durch das Werkstück aufgenommene Silicium-Masse durch Wägung des Beckens **(22)** vor dem Aufsetzen des Werkstücks **(95)** und nach der Infiltration und der Entfernung des Werkstücks **(95)** gemessen wird.

4. Verfahren nach Anspruch 1, **dadurch gekennzeichnet, dass** die Rollendochten (26) in Form von Prismen mit polygonalem Querschnitt ausgeführt sind, und dass deren Drehung taktartig erfolgt.

5. Vorrichtung zur Durchführung des Verfahrens gemäß Anspruch 1 oder 2, bestehend aus mindestens vier Kammern (**O1**, **O2, O3** und **O4),** die getrennt voneinander heizbar, kühlbar, evakuierbar und mit Gasen spülbar sind, und die durch Schleusen miteinander verbunden sind, wobei in **02** Rollendochte aus CFC vorgesehen sind, gelagert auf BN-Wellen.

6. Vorrichtung gemäss Anspruch 5, zur Durchführung des Verfahrens gemäß Anspruch 1 oder 2, umfassend Rollendochte (26) mit porösem Außenteil (26b) und massivem Innenteil (26a).

7. Vorrichtung gemäss Anspruch 5, zur Durchführung des Verfahrens gemäß Anspruch 1 oder 2, umfassend Rollendochte (26", 26 "') in Form von Prismen mit polygonalem Querschnitt.

8. Vorrichtung gemäss Anspruch 5, zur Durchführung des Verfahrens gemäß Anspruch 1 oder 2, umfassend Rollendochte (26^{IV}, 26 ^{V}) in Form von Prismen mit polygonalem Querschnitt, wobei diese Prismen zur Drehachse parallele gerundete Kanten aufweisen.

9. Vorrichtung gemäß Anspruch 7 oder 8, umfassend einen Taktantrieb zur Drehung der Rollen, wobei nach jeder Teildrehung eine Ruhephase folgt, bei der die Rollendochte (26", 26 "', 26^{IV}, 26 ^{V}) mit einer ebenen Mantelfläche nach oben gerichtet eine vorbestimmbare Zeit in Ruhe bleiben.

## Claims

1. Method of treating workpiece of porous carbon material with liquid silicon with the formation of silicon carbide, comprising the stages
a. preheating carbon workpieces, possible reinforced with fibres, in inert gas, starting from room temperature up to a selected operating temperature T_{B}1,
c. supplying liquid silicon to the porous carbon workpieces at an operating pressure of p_{B}2 and an operating temperature of T_{B}2 and soaking the porous carbon workpieces with liquid silicon
d. reaction of the liquid silicon which has penetrated into the workpieces with carbon at a temperature of T_{B}3 with the formation of silicon carbide
e. applying inert gas to the workpieces and cooling from the operating temperature T_{B}3 to a conditioning temperature Tₖ while continuing the reaction and reducing the stresses occurring in the workpieces
f. cooling of the workpieces to room temperature.
wherein in stage c. the supply of silicon and the transporting of the workpieces takes place via preferably cylindrical rollers, which are porous at least in the outer area and are rotatably mounted, and their rotational speed determines the dwell time for the supply of silicon in stage c. and the reaction of the silicon with the carbon to form silicon carbide in stage d. and wherein temperature T_{B}3 is greater than or equal to the temperature T_{B}2 and in processing stage d. the workpieces are no longer in contact with liquid silicon outside the workpieces.

2. Method according to claim 1 **characterised in that** the operating temperature T_{B}2 is between 1450°C and 1700°C

3. Method according to claim 1 **characterised in that** in stage c. the silicon mass taken up is measured by weighing the basin (22) before applying the workpieces (95) and after infiltration and removal of the workpiece (95).

4. Method according to claim 1 **characterised in that** the roller wicks (26) are in the form of prisms with a polygonal cross-section and that they rotate in step-like manner.

5. Device for implementing the method according to claim 1 or 2, comprising at last four chambers (O1, O2, O3 and O4) which can be heated, cooled, evacuated and flushed with gas separately from one another and are connected to each other by locks, wherein in 02 roller wicks of CFC are provided, supported on BN shafts.

6. Device according to claim 5 for implementing the method according to claim 1 or 2, comprising roller wicks (26) with a porous outer section (26b) and a solid inner section (26a).

7. Device according to claim 5 for implementing the method according to claim 1 or 2 comprising roller wicks (26", 26"') in the form of prisms with a polygonal cross-section.

8. Device according to claim 5 for implementing the method according to claim 1 or 2 comprising roller wicks (26^{IV}, 26^{V}) in the form of prisms with a polygonal cross-section wherein these prisms have rounded edges parallel to the axis of rotation.

9. Device according to claim 7 or 8 comprising a clock drive to rotate the rollers, wherein after each partial rotation a rest pause follows, during which the roller wicks (26", 26"', 26^{IV}, 26^{V}) remain at rest for a predetermined period of time with a flat surface directed upwards.

## Revendications

1. Procédé de traitement de pièces usinées en matériau à base de carbone poreux avec du silicium liquide en formant du carbure de silicium, comprenant les étapes de
a préchauffage de pièces usinées en carbone poreuses éventuellement renforcées avec des fibres sous gaz inerte à partir de la température ambiante à une température de fonctionnement choisie T_{B}1,
c apport de silicium liquide aux pièces usinées en carbone poreuses à une pression de fonctionnement p_{B}2 et à une température de fonctionnement T_{B}2 et imprégnation des pièces usinées en carbone poreuses avec du silicium liquide
d réaction du silicium liquide ayant pénétré dans les pièces usinées avec du carbone dans les pièces usinées à une température T_{B}3 en formant du carbure de silicium e gazage des pièces usinées avec un gaz inerte et refroidissement de la température de fonctionnement T_{B}3 à une température de conditionnement Tₖ en poursuivant la réaction et réduction des tensions survenues dans les pièces usinées
f refroidissement des pièces usinées à température ambiante,
dans lequel à l'étape c, l'apport de silicium et le transport des pièces usinées s'effectuent au moins dans la zone extérieure, de préférence par des rouleaux cylindriques qui sont montés de façon à pouvoir tourner, et leur vitesse de rotation détermine la durée pour l'apport de silicium à l'étape c et la réaction du silicium avec le carbone en formant du carbure de silicium à l'étape d, et dans lequel la température T_{B}3 est supérieure ou égale à la température T_{B}2, et les pièces usinées dans l'étape du procédé d ne sont plus en contact avec du silicium liquide à l'extérieur des pièces usinées.

2. Procédé selon la revendication 1, **caractérisé en ce que** la température de fonctionnement T_{B}2 se situe entre 1450 °C et 1700 °C.

3. Procédé selon la revendication 1, **caractérisé en ce qu'**à l'étape c, la masse de silicium absorbée par la pièce usinée est mesurée par pesage du bassin (22) avant l'installation de la pièce usinée (95) et après l'infiltration et le retrait de la pièce usinée (95).

4. Procédé selon la revendication 1, **caractérisé en ce que** les mèches de rouleau (26) sont en forme de prismes avec une section polygonale, et **en ce que** leur rotation s'effectue de façon cadencée.

5. Dispositif pour la réalisation du procédé selon la revendication 1 ou 2, constitué d'au moins quatre chambres (O1, 02, 03 et 04) qui peuvent être chauffées, refroidies, évacuées et rincées avec des gaz de façon séparée les unes des autres, et qui sont reliées les unes aux autres par des écluses, dans lequel dans 02, des mèches de rouleau en CPC sont prévues, montées sur des arbres BN.

6. Dispositif selon la revendication 5, pour la réalisation du procédé selon la revendication 1 ou 2, comprenant des mèches de rouleau (26) avec une partie extérieure poreuse (26b) et une partie intérieure compacte (26a).

7. Dispositif selon la revendication 5, pour la réalisation du procédé selon la revendication 1 ou 2, comprenant des mèches de rouleau (26", 26"') en forme de prismes avec une section polygonale.

8. Dispositif selon la revendication 5, pour la réalisation du procédé selon la revendication 1 ou 2, comprenant des mèches de rouleau (26^{IV}, 26^{V}) en forme de prismes avec une section polygonale, dans lequel ces prismes présentent des bords arrondis parallèles à l'axe de rotation.

9. Dispositif selon la revendication 7 ou 8, comprenant un entraînement cadencé pour la rotation des rouleaux, dans lequel après chaque rotation partielle suit une phase de repos lors de laquelle les mèches de rouleau (26", 26"', 26^{IV}, 26^{V}) avec une surface de revêtement plane restent orientées vers le haut pendant un temps pouvant être prédéterminé.
